# EUROPÄISCHE PATENTSCHRIFT

(11) **EP 2 188 688 B1**
(45) Veröffentlichungstag und Bekanntmachung des Hinweises auf die Patenterteilung: **24.04.2019**
(21) Anmeldenummer: 08832064.3
(22) Anmeldetag: 12.09.2008
(51) Int. Cl.: G06F 3/0482, G06F 11/32, G05B 23/02

(54) **VERFAHREN ZUR ÜBERWACHUNG EINER TECHNISCHEN ANLAGE UND ÜBERWACHUNGSSYSTEM ZUR DURCHFÜHRUNG DES VERFAHRENS**
METHOD FOR MONITORING A TECHNICAL INSTALLATION AND MONITORING SYSTEM FOR CARRYING OUT SAID METHOD
PROCÉDÉ DE SURVEILLANCE D'UNE INSTALLATION TECHNIQUE ET SYSTÈME DE SURVEILLANCE PERMETTANT DE METTRE EN OEUVRE LE PROCÉDÉ

(30) Priorität: 14.09.2007 DE 102007044080
(43) Veröffentlichungstag der Anmeldung: 26.05.2010
(73) Patentinhaber: Siemens Aktiengesellschaft, 80333 München (DE)
(72) Erfinder: FRYE, Uwe, 76767 Hagenbach (DE); SEIBERT, Eckhard, 76767 Hagenbach (DE); WALZ, Horst, 75334 Straubenhardt (DE)
(86) Internationale Anmeldenummer: PCT/EP2008/062186
(87) Internationale Veröffentlichungsnummer: WO 2009/037206

(56) Entgegenhaltungen:
- DE-A1- 10 223 725
- DE-A1- 10 348 563
- US-A1- 2007 156 266

## Beschreibung

Die Erfindung bezieht sich auf ein Verfahren zur Überwachung einer technischen Anlage mit einer Mehrzahl von Anlagenkomponenten, bei dem mittels einer Anzeigeeinheit eine Anzahl von Einzelmeldungen umfassende Zustandsmeldungen eines Zustands eines überwachten Prozesses oder einer der Anlagenkomponenten angezeigt werden. Sie betrifft weiterhin ein entsprechendes Überwachungssystem zur Durchführung des Verfahrens.

In einer Leitwarte zur Steuerung einer technischen Anlage, insbesondere einer Kraftwerksanlage, oder in so genannten Prozessleitsystemen fallen ständig große Mengen verschiedener Messdaten an, die in ihrer Gesamtheit den Anlagen- oder Betriebszustand der technischen Anlage beschreiben. Das Bedienpersonal der Anlage steht vor der Aufgabe, die für den Betriebszustand jeweils relevanten Messdaten oder Messgrößen zu identifizieren und ihre Werte in Bezug auf den Zustand der Anlage zu verfolgen, zu analysieren und zu interpretieren. Dabei ist die Prozessführung in der Leitwarte oder im Prozessleitsystem üblicherweise unter Rückgriff auf geeignete Anzeigeeinheiten, insbesondere Bildschirme oder Monitore, realisiert, über die situations- oder bedarfsgerecht geeignete Informationen für das Bedienpersonal bereitgestellt werden.

Gerade bei der Überwachung vergleichsweise komplexer technischer Anlagen, die üblicherweise eine Mehrzahl von zur Abwicklung von Prozessschritten datenseitig miteinander verbundene Anlagenkomponenten umfassen, werden in derartigen Prozessleitsystem abnormale Zustände, die beispielsweise auf Fehlfunktionen einzelner Komponenten schließen lassen oder auch in Form von Warnmeldungen oder dergleichen einen Handlungsbedarf für das Bedienpersonal charakterisieren, in Form von entsprechenden Zustandsmeldungen auf die jeweilige Anzeigeeinheit ausgegeben, so dass die Informationen vom Bedienpersonal wahrgenommen werden können. Derartige Zustandsmeldungen, die unter Rückgriff auf herkömmliche Anzeige- oder Displaytechniken üblicherweise als so genannte Meldefenster ausgegeben werden, umfassen dabei in der Regel eine Mehrzahl von Einzelmeldungen oder Einzelinformationen, die in ihrer Gesamtheit den Informationsinhalt der jeweiligen Zustandsmeldung wiedergeben. Insbesondere bei auf spezifische Anlagenkomponenten bezogenen Zustandsmeldungen können dabei die enthaltenen Einzelinformationen oder -meldungen beispielsweise für die jeweilige Anlagenkomponente relevante Messwerte oder -parameter oder auch weitere Informationen über der jeweiligen Anlagenkomponente zugeordnete oder mit dieser datenseitig verbundene weitere Anlagenkomponenten enthalten.

Aus der DE 102 23 725 A1 ist ein Ansatz bekannt, bei dem für Einrichtungen eines technischen Prozesses Indexwerte ermittelt und verwaltet werden und bei dem der Benutzer zum Beispiel konfigurieren kann, dass auf der Benutzeroberfläche ein Anzeigefenster erscheint, wenn ein zu einem Motor gehöriger Indexwert ein mögliches Problem anzeigt, oder dass ein Popup-Fenster geöffnet wird, wenn sich für eine von einem Motor beeinflusste Einheit ein außergewöhnlich hoher oder niedriger Indexwert ergibt.

Üblicherweise werden die situations- oder bedarfsgerecht zur Anzeige zu bringenden Zustandsmeldungen in der Form vorkonfigurierter Meldefenster zur Anzeige gebracht, wobei der Informationsinhalt der jeweiligen Meldefenster bereits bei der Auslegung der technischen Anlage durch manuelle oder projektbezogene Zuordnung von Anlagenteilen, Parametern oder dergleichen zur jeweiligen Zustandsmeldung bzw. zum jeweiligen Meldefenster zugewiesen wird. Der Inhalt oder Informationsgehalt der jeweiligen Zustandsmeldung oder des für diese jeweils erzeugten Meldefensters enthält somit sämtliche Meldungen der zugeordneten Meldequellen, also beispielsweise der den zugeordneten Anlagenkomponenten zugewiesenen Sensoren, Messwertaufnehmer oder dergleichen, so dass ein vergleichsweise umfassender und komplexer Informationsgehalt der jeweiligen Zustandsmeldung oder des korrespondierenden Meldefensters entsteht. Gerade im Hinblick auf die damit verbundenen üblicherweise großen Datenmengen bedingt dies, dass das Bedienpersonal zur ordnungsgemäßen Ursachenerkennung oder Diagnose eine Filterung der angezeigten Informationen vornehmen muss, um die angebotene Informationsmenge auf ein verarbeitbares Maß zu reduzieren.

Der Erfindung liegt daher die Aufgabe zugrunde, ein Verfahren zur Überwachung einer technischen Anlage der oben genannten Art anzugeben, das eine besonders bedarfsgerechte und benutzerfreundliche Aufbereitung der darzustellenden Informationen bei der Erzeugung einer Zustandsmeldung ermöglicht. Des Weiteren soll ein zur Durchführung des Verfahrens besonders geeignetes Überwachungssystem einer technischen Anlage angegeben werden.

Bezüglich des Verfahrens wird diese Aufgabe erfindungsgemäß durch den unabhängigen Anspruch 1 gelöst. Vorteilhafte Ausgestaltungen der Erfindung sind den Unteransprüchen zu entnehmen.

Die Erfindung geht dabei von der Überlegung aus, dass gerade im Hinblick auf die üblicherweise hohe Komplexität und Vielfalt der anlagenrelevanten Informationen eine besonders hohe Benutzer- und Bedienfreundlichkeit eines Überwachungssystems erreichbar ist, indem bereits frühzeitig, also insbesondere bereits bei der Erzeugung der Zustandsmeldungen, eine geeignete Vorfilterung der darzustellenden Informationen vorgenommen wird. Um dabei die Diagnose des Anlagenzustands und damit auch ein zielgerichtetes Handeln und Reagieren des Bedienpersonals besonders zu erleichtern, sollte die Vorfilterung der verfügbaren Informationen dabei besonders zielgerichtet und fokussiert vorgenommen werden. Dabei ist vorgesehen, dass der Inhalt oder Informationsgehalt der zu erzeugenden Zustandsmeldung nicht statisch und somit unter Rückgriff auf vorkonfigurierte Informationsstrukturen, sondern vielmehr dynamisch, also insbesondere situationsbezogen, erfolgt.

Ein besonders hoher Grad an zweckgerichteter und fokussierter Vorverarbeitung und -filterung der verfügbaren Informationen ist dabei erreichbar, indem in besonders vorteilhafter Ausgestaltung die Ermittlung der im Rahmen der jeweiligen Zustandsmeldung anzuzeigenden Einzelmeldungen kontextbezogen erfolgt. Unter "kontextbezogen" ist hierbei insbesondere zu verstehen, dass der Informationsinhalt der anzuzeigenden Zustandsmeldung und somit die auszuwählenden Einzelmeldungen abhängig vom Kontext, aus dem heraus Zustandsmeldung erzeugt werden soll, ausgewählt wird.

Dabei kann einerseits in einer vorteilhaften Ausgestaltung eine Kontext bezogene Auswahl der Einzelelemente in dem Sinne erfolgen, dass für die Anzeige einer spezifischen Anlagenkomponente oder einer Gruppe von Anlagenkomponenten zugeordneten Zustandsmeldung die Auswahl der für diese anzuzeigenden Einzelmeldungen abhängig von der datenseitigen Verknüpfung der jeweiligen Anlagenkomponente oder Gruppe von Anlagenkomponenten mit anderen Anlagenkomponenten vorgenommen wird. Bei der kontextbezogenen Auswahl der anzuzeigenden Einzelmeldungen wird dabei somit insbesondere die datenseitige Verknüpfung verschiedener Anlagenkomponenten miteinander und somit deren gegenseitige Beeinflussung mit berücksichtigt. Als Kontext kann dabei insbesondere auch angesehen werden, dass Meldungselemente unter Rückgriff auf Funktionspläne oder die leittechnische Struktur des Systems gemäß den in einem Prozessbild dargestellten Funktionen ausgewählt werden, wobei Prozessbilder die verfahrenstechnische Sicht auf den Prozess repräsentieren und zur Prozessbeobachtung oder -bedienung verwendet werden können. In derartige Prozessbilder können beispielsweise auch Piktogramme integriert sein.

Des Weiteren können als Kontext in diesem Sinne auch Meldungen einer Automatisierungsebene wie beispielsweise der Übersichts-, der Bereichs- oder der Einzelebene aufgefasst werden, wobei die Automatisierungsebene die leittechnische Sicht der Funktionsabläufe wiedergibt. Ebenfalls als Kontext aufgefasst werden können Meldungen einer einzelnen Automatisierungsfunktion, dargestellt in Prozessbildern oder in einer Automatisierungsebene.

In alternativer oder zusätzlicher vorteilhafter Weiterbildung kann die Auswahl der im Rahmen einer Zustandsmeldung anzuzeigenden Einzelmeldungen auch situations- oder betriebszustandsabhängig vorgenommen werden, wobei zweckmäßigerweise für die Anzeige einer Zustandsmeldung die Auswahl der für diese anzuzeigenden Einzelmeldungen abhängig von den die Anzeige der Zustandsmeldung auslösenden Betriebsbedingungen vorgenommen wird. Dabei kann insbesondere berücksichtigt werden, ob die Auslösung der Anzeige einer Zustandsmeldung automatisiert, also im Sinne einer Warnmeldung, oder manuell, also im Sinne eines vom Bedienpersonal initiierten Abrufs von Information, erfolgt. Gerade bei einer manuellen Auslösung einer Zustandsmeldung, beispielsweise durch Anklicken eines entsprechenden Symbols auf der Anzeigeeinheit durch das Bedienpersonal, kann bei der Auswahl der Einzelmeldungen der Kontext in dem Sinne berücksichtigt werden, dass Parameter unter Randbedingungen des Kontextes, aus dem heraus angeklickt wurde, in die Auswahl der Einzelmeldungen einfließen. Der Kontext, aus dem heraus angeklickt wurde, kann dabei seinerseits durch ein Fenster oder eine Teileinheit davon, z. B. durch ein graphisches Objekt, insbesondere eine piktogrammartige Darstellung einer Anlagenkomponente, eines Aggregats oder eines Funktionssymbols, repräsentiert sein.

Bezüglich des Überwachungssystems wird die genannte Aufgabe durch den unabhängigen Anspruch 6 gelöst.

Vorteilhafterweise ermittelt die Steuereinheit dabei die für eine Zustandsmeldung anzuzeigenden Einzelmeldungen Kontext abhängig.

In besonders zweckmäßiger Weiterbildung werden die Zustandsmeldungen dabei in Form von Meldefenstern zur Anzeige gebracht.

Die mit der Erfindung erzielten Vorteile bestehen insbesondere darin, dass durch die kontextbezogene Auswahl der im Rahmen einer Zustandsmeldung anzuzeigenden Informationen oder Einzelmeldungen eine besonders ziel- und bedarfsgerechte Vorauswahl der zur Anzeige gebrachten Einzelinformationen erreichbar ist. Dabei ist dem Bedienpersonal in der Art einer geeigneten Vor- und Aufbereitung der anzuzeigenden Informationen ein besonders erleichterter Rückschluss und Zugriff auf die besonders situationsrelevanten Informationen ermöglicht, so dass die Diagnose von Anlagenzuständen und eine geeignete Reaktion hierauf besonders erleichtert wird.

Ein Ausführungsbeispiel der Erfindung wird anhand einer Zeichnung näher erläutert. Darin zeigen:
- FIG 1: ein Funktionsschema eines Prozesses mit zur Durchführung eines Verfahrens zur Überwachung einer technischen Anlage vorgesehenen Komponenten, und
- FIG 2, 3: jeweils eine Bildschirmdarstellung einer technischen Anlage bzw. eines zugehörigen Prozesses mit mindestens einer Zustandsmeldung in Form eines Meldefensters.

Gleiche Teile sind in allen Figuren mit denselben Bezugszeichen versehen.

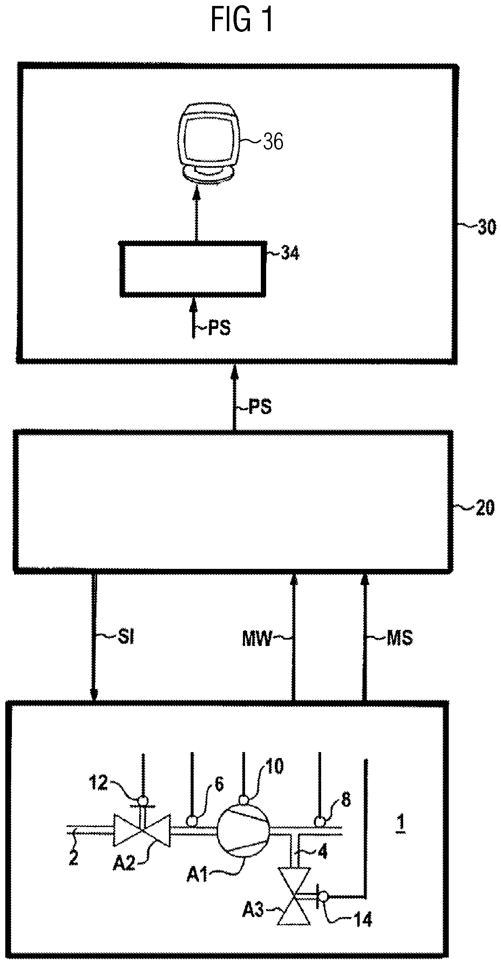

Der im Ausführungsbeispiel gemäß FIG 1 dargestellte Prozessablauf innerhalb einer Anlage 1 ist Teil eines Gesamtprozesses einer nicht näher dargestellten Kraftwerksanlage. Die Anlage 1 umfasst eine in eine Dampfleitung 2 geschaltete Pumpe A1 mit vorgeschalteten Dampfventil A2 und ein in einer Abzweigleitung 4 geschaltetes Abblaseregelventil A3. Zwischen der Pumpe A1 und dem Dampfventil A2 ist ein Durchflusssensor 6 vorgesehen, mit dem die pro Zeiteinheit durch die Dampfleitung 2 strömende Dampfmenge erfasst wird. Außerdem ist auf der Druckseite der Pumpe A1 ein Drucksensor 8 vorgesehen. Die Pumpe A1 ist mit einem Drehzahlsensor 10 versehen. Das Dampfventil A2 sowie das Abblaseregelventil A3 weisen jeweils ein Steuer- und Meldeelement 12 bzw. 14 auf. Die Pumpe A1 und das Dampfventil A2 sowie das Abblaseregelventil A3 werden im folgenden auch als Anlagenkomponenten A1 bis A3 bezeichnet.

Von den Sensoren 6, 8 und 10 erfasste Messwerte MW sowie von den Meldeelementen 12 und 14 abgegebenen Meldesignale MS werden einem Automatisierungssystem 20 zugeführt. In Automatisierungseinheiten des Automatisierungssystems 20 werden die Messwerte MW und die Meldesignale MS zu Prozesssignalen PS vorverarbeitet. Gegebenenfalls werden Steuersignale SI an die Anlagenkomponenten A1 bis A3 der Anlage 1 abgegeben. Durch die innerhalb des Automatisierungssystems 20 ablaufenden Prozesse wird die Kraftwerksanlage mit ihren Anlagenkomponenten A1 bis A3 automatisch gesteuert und überwacht.

Die in den Automatisierungseinheiten des Automatisierungssystems 20 aus Online erfassten Messwerten MW und/oder Meldesignalen MS generierten Prozesssignale PS werden anschließend einem zentralen Überwachungssystem 30, zum Beispiel einem leittechnischen System oder einem Prozessleitsystem, zugeführt. Das Überwachungssystem 30 kann insbesondere eine geeignete Datenverarbeitungseinheit sein. Das Überwachungssystem 30 dient dabei insbesondere in der Art eines zentralen Prozesssystems der Prozessführung und -überwachung.

Bei einem Störfall oder einem sonstigen abnormalen Zustand des überwachten Prozesses oder einer der Anlagenkomponenten A1 bis A3 werden die für diesen Störfall aus Online erfassten Messwerten MW oder Meldesignale MS generierten Prozesssignale PS einer Steuereinheit 34 des Überwachungssystems 30 zugeführt. Führt z.B. eine Störung in einem in die Dampfleitung 2 geschalteten (nicht dargestellt) Anlagenteil zu einer Druckerhöhung in der Dampfleitung 2, so sinkt die Drehzahl der Pumpe A1 ab, und das Abblaseregelventil A3 öffnet. Das Automatisierungssystem 20 schließt darauf mittels eines Steuersignals SI das Dampfventil A2, so dass sich die Drehzahl der Pumpe A1 normalisiert und das Abblaseregelventil A3 wieder schließt. Nach einer darauffolgenden erneuten Öffnung des Dampfventils A2 durch das Automatisierungssystem 20 erhöht sich wiederum der Druck innerhalb der Dampfleitung 2, so dass sich der Vorgang solange wiederholt, bis die Störung beseitigt ist.

Diesen Vorgang beschreibende Messwerte MW, z.B. die vom Durchflusssensor 6 erfasste Dampfmenge und der vom Drucksensor 8 erfasste Dampfdruck sowie die vom Drehzahlsensor 10 erfasste Pumpendrehzahl, werden dem Automatisierungssystem 20 zugeführt. Als Reaktion auf die im Automatisierungssystem 20 eintreffenden Messwerte MW werden die Steuersignale SI zum Öffnen oder Schließen der Ventile A2 und A3 vom Automatisierungssystem 20 der Anlage 1 ausgegeben. Zur Analyse werden aus den Messwerten MW und den Steuersignalen SI Prozesssignale PS erstellt.

Zur Information des Bedienpersonals, und um gegebenenfalls ein manuelles Eingreifen in die Prozessabläufe zu ermöglichen, werden in derartigen abnormalen Situationen oder Störfällen von der Steuereinheit 34 Zustandsmeldungen erzeugt oder bereitgestellt, die auf einer zugeordneten Anzeigeeinheit 36 in Form von Meldefenstern darstellbar sind. Um dabei eine besonders situations- und bedarfsgerechte Darstellung der relevanten Informationen und somit ein besonders fokussiertes Eingreifen des Bedienpersonals zu ermöglichen, ist bereits bei der Erzeugung der Zustandsmeldung eine geeignete Vorfilterung der verfügbaren Informationen vorgesehen. Dazu werden die zur Bildung der Zustandsmeldung zu verwendenden Informationsinhalte oder Einzelmeldungen situationsabhängig und kontextabhängig ausgewählt.

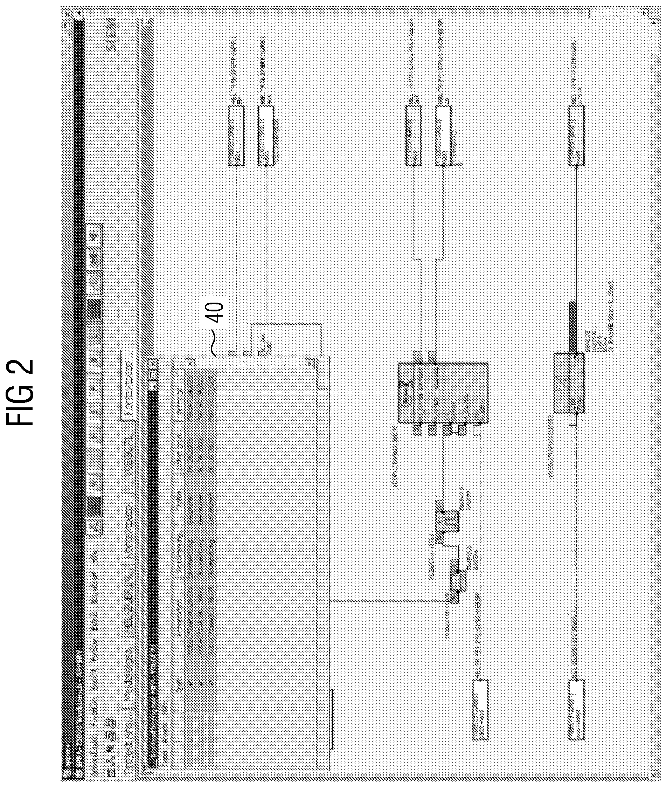

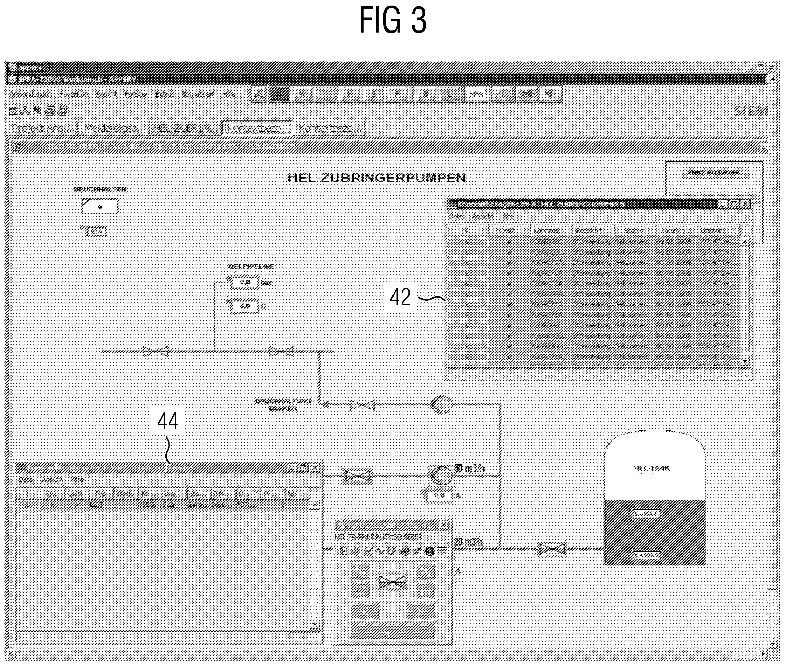

Die Zustandsmeldungen werden dabei in Form von so genannten Meldefenstern 40, 42, 44 auf die Anzeigeeinheit 36 ausgegeben, wie sie beispielsweise in den Bildschirmdarstellungen gemäß FIG 2 und 3 dargestellt sind. Unter kontextbezogener Auswahl der zu berücksichtigenden Einzelmeldungen oder Informationen ist dabei insbesondere folgendes zu verstehen:
- Meldungen der in einem Prozessbild dargestellten Funktionen: Prozessbilder repräsentieren die verfahrenstechnische Sicht auf den Prozess und werden zur Prozessbeobachtung und Prozessbedienung verwendet. In die Prozessbilder sind beispielsweise Piktogramme eingebaut.
- Meldungen einer Automatisierungsebene (Übersichts-, Bereichs- oder Einzelebene): die Automatisierungsebene stellt die leittechnische Sicht dar.
- Meldungen einer einzelnen Automatisierungsfunktion werden dargestellt in Prozessbildern oder in einer Automatisierungsebene. Die Automatisierungsfunktion umfasst beispielsweise eine Pumpe, ein Ventil oder einen Regler.

Bei der Aufbereitung und Vorverarbeitung der Informationen kann dabei beispielsweise nunmehr die Pumpe A1 in einem Piktogramm eines Prozessbildes angeklickt werden, wobei beispielsweise bei Betätigung der rechten Maustaste alle Meldungen, die die Pumpe A1 betreffen, in einem zugeordneten Meldefenster erscheinen. Gleichermaßen kann für andere Konstellationen oder Kontexte eine entsprechende Informationszuordnung vorgesehen sein. Wird beispielsweise ein Softwarebaustein oder ein (graphisches) Objekt, das eine bestimmte Funktion im Kraftwerk repräsentiert, in der entsprechenden Sicht auf der Anzeigeeinheit 36 angeklickt, so werden auf eine derartige Bedienanforderung hin relevante Meldungen bezüglich dieses Objekts oder Bausteins angezeigt.

Die in einem Meldefenster anzuzeigenden Meldungen werden unter Ausnutzung der Informationen eines Datenmodels, welches Beziehungen von Meldequellen und Kontexten enthält, automatisch ermittelt. Das Suchkriterium ergibt sich dabei aus dem Kontext, aus dem heraus das Meldefenster geöffnet wird.

Konkret ist beispielsweise in der Bildschirmdarstellung gemäß FIG 3 innerhalb eines Basisfensters eine diagrammatische Darstellung von miteinander verknüpften Anlagenkomponenten einer technischen Großanalage mit zugeordneten Prozess- und Zustandsparametern enthalten. Dabei handelt es sich um einen spezifischen Ausschnitt aus einem größeren Prozessbild (verfahrenstechnische Sicht). Die einzelnen Anlagenkomponenten sind piktogrammartig in Form von graphischen Objekten dargestellt.

Beim Auftreten von Störfällen oder von besonderen Betriebssituationen, die durch geeignete Messfühler und anlageninterne Überwachungsroutinen automatisch erfasst und identifiziert werden, werden die betroffenen Komponenten oder Aggregate oder die zugehörigen Zustandsparameter in der Bildschirmdarstellung durch die Anlagensteuerung automatisch farblich hervorgehoben, etwa in der Signalfarbe rot.

Eine auf diese Weise "alarmierte" Bedienperson kann dann beispielsweise mit einem Mauseingabegerät oder dergleichen auf einen freien Bereich des Basisfensters klicken und durch Betätigen der rechten Maustaste das Meldefenster 42 aufrufen, in dem eine Anzahl von für den gewählten Ausschnitt des Prozessbildes, d. h. den so definierten Kontext, relevanten Statusmeldungen angezeigt wird. Insbesondere kann das Meldefenster 42 in der Art einer Kurzzusammenfassung eine tabellarische Auflistung von Statusmeldungen aller auf dem Bildausschnitt des Basisfensters dargestellten Anlagenkomponenten enthalten. Die so gebündelten Einzelmeldungen können beispielsweise jeweils eine fortlaufende Nummer, einen Kennzeichnungscode, eine Typenbezeichnung oder Gruppenzuordnung, eine Fehlerbeschreibung, Datums- und Zeitstempel, zugehörige Parameter sowie ggf. weitere Statusinformationen beinhalten.

Die Bedienperson kann darüber hinaus auch die einzelnen Grafikobjekte, die die Anlagenkomponenten repräsentieren - insbesondere die farblich hervorgehobenen Grafikobjekte, die die gestörten oder "auffälligen" Anlagenkomponenten darstellen, welche sich in besonderen Betriebszuständen befinden - anklicken und z. B. durch Betätigen der rechten Maustaste ein für die jeweilige Komponente spezifisches Meldefenster 44 mit (vorzugsweise ausschließlich) komponentenspezifischen Einzelmeldungen aufrufen bzw. in den Vordergrund bringen.

Da derartige kontextspezifische Meldefenster vorzugsweise erst auf eine entsprechende Bedienanforderung hin eingeblendet werden, wird die Bedienperson von einer Flut automatisch eingeblendeter "Popup"-Fenster verschont.

Der gleiche Funktionsmechanismus ist in FIG 2 für eine Bildschirmdarstellung angegeben, die eine entsprechende leitechnische, d. h. übergeordnete bzw. zusammenfassende und abstrakte Sicht auf die zu überwachende technische Anlage und deren Steuerungsabläufe repräsentiert. Auch hier lassen sich bei Bedarf entsprechende Meldefenster 40 aufrufen, die kontextbezogene Inhalte vermitteln.

## Patentansprüche

1. Verfahren zur Überwachung einer technischen Anlage (1), in der ein technischer Prozess durchgeführt wird,
wobei in einem Automatisierungssystem (20), welches Messwerte (MW) und Meldesignale (MS) von der technischen Anlage (1) erhält, aus den Messwerten (MW) und Meldesignalen (MS) Prozesssignale (PS) erstellt werden, welche an eine Vorrichtung zur Überwachung (30) mit einer Steuereinheit (34) und einer Anzeigeeinheit (36) weitergegeben werden,
**dadurch gekennzeichnet,**
- **dass** die Steuereinheit (34) aus den zugeführten Prozesssignalen (PS) Zustandsmeldungen erzeugt, nachdem eine Bedienperson auf der Anzeigeeinheit (36) im Prozessbild ein graphisches Objekt oder in einer Automatisierungsebene einen Softwarebaustein anklickt, worauf alle das ausgewählte graphische Objekt oder den ausgewählten Softwarebaustein betreffende Zustandsmeldungen auf der zugeordneten Anzeigeeinheit (36) angezeigt werden, wobei jede Zustandsmeldung eine Mehrzahl von Einzelmeldungen umfasst und in einem Meldefenster (40, 42) dargestellt wird,
- **dass** bei der Erzeugung der Zustandsmeldungen eine Vorfilterung der verfügbaren Informationen stattfindet und die zur Bildung der Zustandsmeldungen zu verwendenden Einzelmeldungen situationsabhängig und kontextabhängig ausgewählt werden, und
- **dass** die anzuzeigenden Einzelmeldungen unter Ausnutzung der Informationen eines Datenmodells, welches Beziehungen zwischen Meldequellen und Kontexten enthält, automatisch ermittelt werden.

2. Verfahren nach Anspruch 1, bei dem für die Anzeige einer spezifischen Anlagenkomponente (A1, A2, A3) oder einer Gruppe von Anlagenkomponenten (A1, A2, A3) zugeordneten Zustandsmeldung die Auswahl der für diese anzuzeigenden Einzelmeldungen abhängig von der datenseitigen Verknüpfung der jeweiligen Anlagenkomponente (A1, A2, A3) oder Gruppe von Anlagenkomponenten (A1, A2, A3) mit anderen Anlagenkomponenten (A1, A2, A3) vorgenommen wird.

3. Verfahren nach einem der Ansprüche 1 oder 2, bei dem für die Anzeige einer Zustandsmeldung die Auswahl der für diese anzuzeigenden Einzelmeldungen abhängig von den die Anzeige der Zustandsmeldung auslösenden Betriebsbedingungen vorgenommen wird.

4. Vorrichtung (30) zur Überwachung einer technischen Anlage (1), in der ein technischer Prozess durchgeführt wird,
wobei die technische Anlage (1) eine Mehrzahl von Anlagenkomponenten (A1, A2, A3) umfasst,
wobei die Anlagenkomponenten (A1, A2, A3) mit Sensoren (6,8,10) und Meldeelementen (12,14) verbunden sind, die Messwerte (MW) und Meldesignale (MS) an ein Automatisierungssystem (20) weitergeben, welches ausgebildet ist, aus den Messwerten (MW) und Meldesignalen (MS) Prozesssignale (PS) zu erstellen und welches an die Vorrichtung zur Überwachung (30) angeschlossen ist,
**dadurch gekennzeichnet,**
**dass** die Vorrichtung (30) eine Steuereinheit (34) umfasst, die derart ausgebildet ist, dass sie aus den zugeführten Prozesssignalen (PS) Zustandsmeldungen erzeugt, welche anschließend auf einer Anzeigeeinheit (36) angezeigt werden, wobei die Zustandsmeldungen eine Anzahl von Einzelmeldungen umfassen und in einem Meldefenster auf der Anzeigeeinheit (36) angezeigt werden,
wobei die Erzeugung der Zustandsmeldungen gemäß einem der Verfahren nach Anspruch 1, 2 oder 3 erfolgt.

## Claims

1. Method for monitoring a technical installation (1), in which a technical process is performed,
wherein in an automation system (20), which contains measurement values (MW) and message signals (MS) of the technical installation (1), process signals (PS) are created from the measurement values (MW) and message signals (MS), which process signals (PS) are forwarded to an apparatus for monitoring (30) using a control unit (34) and a display unit (36),
**characterised in that**
- the control unit (34) generates status messages from the supplied process signals (PS), once an operator clicks on a graphical object on the display unit (36) in the process image or a software component in an automation level, whereupon all the status messages relating to the selected graphical object or the selected software component are displayed on the assigned display unit (36), wherein every status message comprises a plurality of individual messages and is represented in a message window (40, 42),
- that when generating the status messages a prefiltering of the available information takes place and the individual messages to be used for forming the status messages are selected depending on the situation and context, and
- that the individual messages to be displayed are created automatically while using the information of a data model which contains relationships between message sources and contexts.

2. Method according to claim 1, wherein to display a status message assigned to a specific installation component (A1, A2, A3) or a group of installation components (A1, A2, A3), the individual messages to be displayed for this are selected as a function of the data-side linking of the respective installation component (A1, A2, A3) or group of installation components (A1, A2, A3) to other installation components (A1, A2, A3).

3. Method according to one of claims 1 to 2, wherein the individual messages to be displayed for a status message are selected as a function of the operating conditions triggering the display of the status message for the display of said status message.

4. Apparatus (30) for monitoring a technical installation (1), in which a technical process is performed,
wherein the technical installation (1) comprises a plurality of installation components (A1, A2, A3),
wherein the installation components (A1, A2, A3) are connected to sensors (6, 8, 10) and message elements (12, 14), which forward measurement values (MW) and message signals (MS) to an automation system (20), which is embodied to create process signals (PS) from the measurement values (MW) and message signals (MS) and which is linked to the apparatus for monitoring (30)
**characterised in that**
the apparatus (30) comprises a control unit (34), which is embodied such that it generates status messages from the supplied process signals (PS), which status messages are then displayed on a display unit (36), wherein the status messages comprise a number of individual messages and are displayed in a message window on the display unit (36),
wherein the generation of the status messages takes place in accordance with the method according to claim 1, 2 or 3.

## Revendications

1. Procédé de contrôle d'une installation (1) technique, dans laquelle on effectue un processus technique,
dans lequel, dans un système (20) d'automatisation, qui reçoit des valeurs (MW) de mesure et des signaux (MS) indicateurs de l'installation (1) technique, on établit, à partir des valeurs (MW) de mesure et des signaux (MS) indicateurs, des signaux (PS) de processus, que l'on achemine à un système de contrôle (30), ayant une unité (34) de commande et une unité (36) d'affichage,
**caractérisé**
- **en ce que** l'unité (34) de commande produit, à partir des signaux (PS) de processus, qui y sont envoyés, des messages d'état, après qu'une personne de service a cliqué, sur l'unité (36) d'affichage dans l'image de processus, sur un objet graphique ou dans un plan d'automatisation sur un module logiciel, après quoi, tous les messages d'état concernant l'objet graphique sélectionné ou le module logiciel sélectionné sont affichés sur l'unité (36) d'affichage associé, chaque message d'état comprenant une pluralité de messages individuels et étant représenté dans une fenêtre (40, 42) indicatrice,
- **en ce que**, lors de la production des messages d'état, un préfiltrage des informations disponibles a lieu et les messages individuels à utiliser pour former les messages d'état sont sélectionnés en fonction de la situation et en fonction du contexte et
- **en ce que** les messages individuels à afficher sont déterminés automatiquement en utilisant les informations d'un modèle de données, qui contient des relations entre des sources indicatrices et des contextes.

2. Procédé suivant la revendication 1, dans lequel, pour l'affichage d'un message d'état affecté à un élément (A1, A2, A3) spécifique de l'installation ou à un groupe d'éléments (A1, A2, A3) de l'installation, on effectue la sélection des messages individuels à afficher pour celui-ci, en fonction de la combinaison, du côté des données, de l'élément (A1, A2, A3) respectif de l'installation ou du groupe d'éléments (A1, A2, A3) de l'installation avec d'autres éléments (A1, A2, A3) de l'installation.

3. Procédé suivant l'une des revendications 1 ou 2, dans lequel, pour afficher un message d'état, on effectue le choix des messages individuels à afficher pour celui-ci, en fonction des conditions de fonctionnement déclenchant l'affichage du message d'état.

4. Système (30) de contrôle d'une installation (1) technique, dans laquelle s'effectue un processus technique, dans lequel l'installation (1) technique comprend une pluralité d'éléments (A1, A2, A3) d'installation,
dans lequel les éléments (A1, A2, A3) de l'installation sont reliés à des capteurs (6, 8, 10) et à des éléments (12, 14) indicateurs, qui acheminent des valeurs (MW) de mesure et des signaux (MS) indicateurs à un système d'automatisation constitué pour établir, à partir des valeurs (MW) de mesure et des signaux (MS) indicateurs, des signaux (PS) de processus, et qui est raccordé au système de contrôle (30),
**caractérisé**
**en ce que** le système (30) comprend une unité (34) de commande, constituée de manière à, à partir des signaux (PS) de processus, envoyer des messages d'état, qui sont affichés ensuite sur une unité (36) d'affichage, les messages d'état comprenant un certain nombre de messages individuels et étant affichés dans une fenêtre indicatrice sur l'unité (36) d'affichage,
dans lequel la production des messages d'état s'effectue suivant l'un des procédés selon la revendication 1, 2 ou 3.
